Europäisches Patentamt

**European Patent Office**

**Office européen des brevets**

(11) Publication number: **0 128 545**
A2

(12) # EUROPEAN PATENT APPLICATION

(21) Application number: **84106544.4**

(22) Date of filing: **07.06.84**

(51) Int. Cl.³: **C 01 B 13/02,** C 01 B 21/04,
B 01 D 53/04

(30) Priority: **08.06.83 US 502068**

(43) Date of publication of application: **19.12.84
Bulletin 84/51**

(84) Designated Contracting States: **BE DE FR GB IT NL**

(71) Applicant: **AIR PRODUCTS AND CHEMICALS, INC., P.O.
Box 538, Allentown, Pennsylvania 18105 (US)**

(72) Inventor: **Sircar, Shivaji, 1508 Bogle Avenue,
Wescosville, PA 18106 (US)**
Inventor: **Greskovich, Eugene Joseph, 2946 Parkview
Lane, Allentown, PA 18103 (US)**

(74) Representative: **Sandmair, Kurt, Dr. Dr. et al,
Patentanwälte Dr. Berg Dipl.-Ing. Stapf Dipl.-Ing.
Schwabe Dr. Dr. Sandmair
Postfach 86 02 45 Stuntzstrasse 16,
D-8000 München 86 (DE)**

(54) **Air separation process.**

(57) Molecular sieve zeolites of the A type having a weight ratio of Ca/Na₂O of at least about 25 are employed for selective nitrogen adsorption from atmospheric air or other gas mixtures containing nitrogen and oxygen, in cyclic processes operating in the vacuum swing mode.

211-P-US02798

# AIR SEPARATION PROCESS

The present invention relates to the field of gas separation and is particularly concerned with separation of oxygen and/or nitrogen from atmospheric air or from other gas mixtures.

## BACKGROUND OF THE INVENTION

Systems for separation of air by selective sorption to recover oxygen and/or nitrogen are well known in the art. Typically, most of these systems employ zeolite molecular sieve adsorbents for selective retention of nitrogen while recovering an oxygen-enriched product stream. Periodically, as the sorbent bed reaches a designed level of sorbed gas, the bed is desorbed and/or purged to remove contained nitrogen before being returned to on-stream operation. The adsorption-desorption cycles rely chiefly on swing in pressure level of these steps in the operating cycle. Also, to maintain continuity of operation a number of such adsorbent beds are operated in parallel, so that while one bed is operating on the adsorption step of the cycle, one or more companion beds are at various stages of regeneration.

- 2 -

0128545

Illustrative of well-known prior art systems proposed for separation of components of air or other gas mixtures by selective adsorption is that disclosed in U.S. Patent 2,944,627. The charged gas mixture, as disclosed in the patent, is introduced to the sorbent column at an initial relatively high pressure during the adsorption step, then the pressure of the bed is lowered to desorb the same. The desorbed bed is purged with part of the unadsorbed effluent product from the adsorption step, followed by repressuring the bed to its initial high pressure level for repetition of the cycle. The patent describes various molecular sieve zeolites and other adsorbents that may be employed depending upon the gas mixture to be separated and/or the component desired to be recovered. For the concentration of nitrogen as a primary effluent product from air separation, the patent advocates the use of molecular sieves of about 4 Angstroms, while for concentration of oxygen as the primary effluent of an air separation, 5A or 13X molecular sieves are preferred.

In general, the predominant choice of an adsorbent for air fractionation described in issued patents has been 5A zeolite (a sodium aluminosilicate partially base exchanged with calcium) or 13X zeolite. (See, for example, U.S. Patents Nos. 3,164,454; 3,280,536; 3,796,022.) Commercial 5A zeolites are those in which 60 to 70% by weight of the Na in the starting zeolite have been replaced by Ca.

According to U.S. Patent 3,313,091, directed to production of an oxygen-enriched stream from atmospheric air, particularly for providing an oxygen-enriched environment within an enclosed area, the desorption of the nitrogen-loaded adsorbent employed in the air separation is effected under vacuum. The patent indicates that for such systems of air separation employing vacuum desorption in regeneration of the nitrogen-containing adsorbent, there may be employed

- 3 -    0128545

Type X or Type A molecular sieves in which 30 to 100%, and most preferably 75 to 98% of their sodium cations are replaced by divalent Group II metal cations or monovalent silver cations. The only operating examples of the patent are limited to the use of 13X sieve, highly exchanged by strontium. The preferred 13X-Sr sieve of the patent was found inferior to 13X-Na and to commercial 5A sieve (calcium form) when the nitrogen desorption step of the cycle was carried out above atmospheric pressure; only in cycles employing vacuum desorption was any beneficial advantage stated to be achieved when using 13X-Sr zeolite.

An air fractionation system employing a pretreatment section for removal of water and carbon dioxide before introducing the feed air to contact with the nitrogen selective adsorbent, is disclosed in U.S. Patent 3,533,221. Regeneration of the nitrogen-loaded adsorbent bed is effected by vacuum-desorption, the desorbed nitrogen passing in reverse flow through the pretreatment bed removing part of the water and $CO_2$ deposited in that adsorbent bed. Provision is also made for periodic regeneration of the adsorbent in the pretreatment section by external heating or by passing hot gas therethrough to remove accumulated water and $CO_2$.

Air fractionation by vacuum swing adsorption (VSA) is also disclosed in U.S. Patents 3,957,463; 4,013,429 and 4,264,340. While other molecular sieves preferentially retaining nitrogen are described as useful, the preferred adsorbent is sodium mordenite.

U.S. Patent 2,882,243 discloses the preparation of Type A zeolite molecular sieves in sodium form and base-exchange of the sodium zeolite by various cations including among these divalent Ca, Mg and Sr. The Ca-exchanged A sieve (85% exchanged) is stated to adsorb nitrogen as well as oxygen at liquid air temperature. The preparation and base exchange of 13X-Na zeolite is disclosed in U.S. Patent 2,882,244.

According to U.S. Patent 4,056,370 the adsorption capacity of 5A zeolite (up to about 60-70% Ca exchanged) for $N_2$ at room temperature is adversely affected by hot activation (regeneration) at atmospheric pressure in the presence of water vapor. Activation in vacuo to avoid this problem, is stated to present other drawbacks when attempted on a commercial scale. When the A zeolite is Ca-exchanged to a level of at least 80%, however, the patent indicates such zeolite is less sensitive to the adverse effect of hot gases. It is further stated that there is no point in carrying out the degree of exchange to above about 90%, however, since such higher level of Ca substitution does not further reduce the sensitivity of the zeolite to regeneration.

As the original sodium content of an A-type zeolite is exchanged by Ca, the size of the pore openings is increased from that of an initial 4-A zeolite, to that of a 5-A zeolite. Up to a Ca exchange level of about 25% the zeolite has the characteristics of sodium zeolite A. Beyond 25% and up to about 40% Ca exchange, the pore size continues to increase, and the zeolite takes on the characteristics of calcium zeolite A (5A sieve). In general, however, commercial 5A sieves are prepared by Ca-exchange to a level of about 60-70%, at which level the 5A sieve has a $Ca/Na_2O$ weight ratio in the order of about 5 or 6. The starting 4A zeolite in a dehydrated state is generally accepted as corresponding to the molecular formula:

$$(1.0 \pm 0.2) \, Na_2O \cdot Al_2O_3 \, (1.85 \pm 0.5) \, SiO_2$$

Since the molar ratio of $Na_2O/Al_2O_3$ in the starting material may vary by as much as 50% (from 0.8/1 to

1.2/1), a more meaningful description of the calcium-exchanged A zeolite is in terms of the $Ca/Na_2O$ ratio of the exchanged zeolite.

As shown by Breck (Zeolite Molecular Sieves, John Wiley and Sons, N.Y. 1974) in the graph at page 641, the nitrogen adsorption capacity of A zeolite (at -196°C remains practically nil and is not significantly affected by the progressive extent of exchange of Na by Ca ions until about 28% of the Na has been replaced by Ca. At this point the original 4A zeolite begins to take on the properties of 5A zeolite, the adsorption capacity for nitrogen rising rapidly with increasing replacement of Na by Ca until about 40% of the Na has been replaced by Ca, at which level a plateau is reached such that further exchange with Ca ions displays practically little effect on the adsorption capacity of the A zeolite for nitrogen. This behavior of Ca-exchanged A zeolite is exhibited not only with respect to nitrogen adsorption, but also in the adsorption capacity of the Ca-exchanged A zeolite for other materials such as normal $C_3$ and $C_7$ paraffins at room temperature, while in the case of isobutane Ca-exchange has little or no effect even after about 50% of the Na has been thus replaced. According to Breck and other investigators, zeolite A divalent ion exchange progressively opens the apertures in the molecular sieve material within the narrow range of from about 25% to about 40% (in the case of Ca), beyond which latter level no significant further increase in pore diameter is achieved. (See Milton, U.S. 2,882,243, column 16; and Heinze, et al., .U.S. 4,056,370, columns 1 and 2).

Continued ion exchange of Na in zeolite A by Ca up to the level of 90% replacement of sodium ion and somewhat beyond, produces no significant improvement in the nitrogen adsorption properties of the zeolite. Thus, although A-zeolites have been disclosed in the

- 6 -                    0128545

art in which more than 90% of the Na ion has been replaced by Ca (see Milton, U.S. 2,882,243), the characteristics of such highly exchanged A zeolites with respect to adsorption of nitrogen have not been heretofore known. Apparently there has been no incentive to investigate the adsorption characteristics of such A zeolites of high Ca content, in view of the earlier knowledge of the plateau observed in previous studies indicating that no enhancement in nitrogen adsorption capacity of A zeolite was to be expected as a result of Ca-exchange beyond about the plateau level reached at about 75-80% Na exchange by Ca.

## SUMMARY OF THE INVENTION

It has now been unexpectedly found that when zeolite A is base exchanged by Ca ions to a level such that the zeolite has a $Ca/Na_2O$ mole ratio, above about 38.7 (weight ratio of 25) the adsorption capacity for nitrogen increases dramatically at a steep rate as the $Ca/Na_2O$ ratio therein is progressively increased. Such A zeolites can be prepared by extended base-exchange of a commercially available 4A or 5A zeolite with a calcium salt until or beyond the point that the indicated $Ca/Na_2O$ ratio is achieved.

Further investigation of the adsorptive properties of the A zeolite having a $Ca/Na_2O$ weight ratio at or above 25 also revealed that while the adsorbent capacity for nitrogen increased at a rapid rate with increased calcium content, the corresponding capacity for adsorbtion of oxygen rose at a considerably slower rate. Accordingly, it appears that these properties of such high calcium substituted A zeolites should be beneficial in the adsorptive separation of nitrogen from oxygen in air or other gas mixtures of these.

In accordance with the present invention, air or another gas mixture comprising oxygen and nitrogen is

- 7 -

0128545

passed through an adsorptive column containing a bed of A zeolite having a $Ca/Na_2O$ weight ratio above about 25 to effect selective retention of nitrogen within the bed and the recovery of an oxygen-enriched stream as a primary gas effluent. This adsorption step is continued for a predetermined time period up to or short of the point that preferential nitrogen retention is achieved and thereafter, the bed is regenerated by the withdrawal of its nitrogen content and prepared for repetition of the on-stream adsorption step.

In a preferred embodiment of the invention, the adsorptive separation of components of the charge gas mixture is carried out in a system comprising a plurality of adsorptive columns operating in parallel during a fixed cycle, such that while one or more of such columns are being operated in the adsorption step, other columns are undergoing various states in the regeneration of the adsorbent, as is well known in the prior art cited above and in common industrial practices.

While the invention is not limited thereto, the full beneficial advantages of the present invention are best obtained in processes and systems of air separation, such as that disclosed in U.S. patent 4,013,429. As described in that patent, ambient air is freed of moisture and $CO_2$ in a pretreatment column and then passed in series through a column containing adsorbent selective for retention of nitrogen in the feed, while unadsorbed oxygen-righ product gas is being recovered as primary effluent. At the conclusion of the adsorption step, the adsorbent column is subjected to regeneration by a sequence of steps including evacuation of the bed to effect desorption of high purity nitrogen, which may be recovered for any desired use. A portion of the high purity nitrogen may be employed to rinse the column before the evacuation step. Following evacuation, the bed is restored to on-stream pressure and the cycle is repeated by reintroducing ambient air.

The improved advantages of the present invention are realized by the use of the A zeolite hereinabove described, having a $Ca/Na_2O$ weight ratio above about 25, in lieu of commercial 5A zeolite, or 13X zeolite.

BRIEF DESCRIPTION OF THE DRAWINGS

In the accompanying drawings:

Figure 1 is a pair of graphs showing in Curve A the nitrogen adsorption capacity of a number of samples of A zeolite at about one atmosphere and about 30°C as a function of increasing $Ca/Na_2O$ ratio therein and in Curve B the corresponding adsorption capacity for oxygen.

Figure 2 is a series of graphs showing the nitrogen adsorption capacities of various A zeolites as functions of increasing pressures at about 30°C.

Figure 3 is a schematic flow diagram illustrative of a system for the practice of the invention.

DETAILED DESCRIPTION OF THE INVENTION

In the selective separation of nitrogen from a mixed gas stream also containing oxygen, such as in fractionation of atmospheric air, by vacuum swing adsorption (VSA) procedures such as disclosed in U.S. patents 4,013,429 and 4,264,340, the performance of the process is very strongly governed by the properties of the adsorbent employed, particularly its specific nitrogen adsorption capacity and its preferential selectivity for nitrogen over oxygen.

In an extensive research program including attempts to improve the nitrogen adsorption capacity of A type zeolites, it was observed that replacement of the Na content of such zeolites by Ca, the plateau heretofore noted at the 75% level persisted beyond that level with little or no increase in nitrogen adsorption capacity of such zeolites when further exchange of Na by Ca was continued to the 90% level, and even to above about a 95% level. It was unexpectedly discovered, however, that as the level of ion exchange was further continued to obtain a Ca-exchanged A zeolite having a $Ca/Na_2O$ mole ratio of 38.7, corresponding to a $Ca/Na_2O$ weight ratio of 25 and above, the nitrogen adsorption capacity of the zeolite again increased sharply with increased replacement of Na by Ca ion.

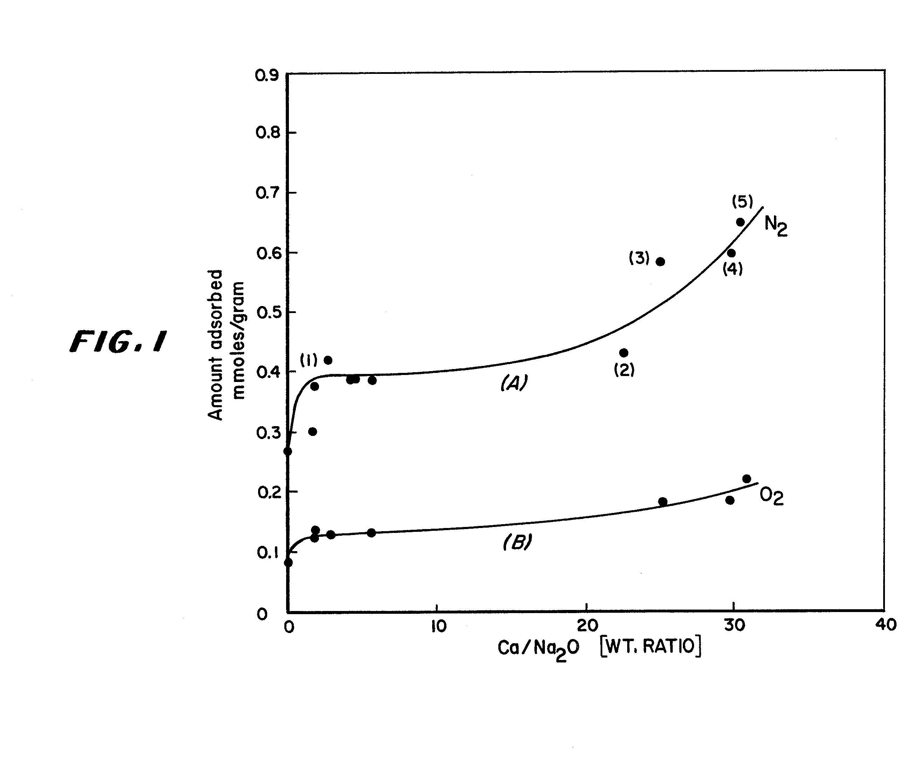

Curve A in Figure 1 of the accompanying drawings is a graph of the adsorption capacity for nitrogen of a number of samples of A zeolites (in millimols/g) as a function of increasing $Ca/Na_2O$ weight ratio. Curve B represents the corresponding adsorption capacity for oxygen. It will be seen from Curve A that the nitrogen adsorption capacity of the initial sodium A zeolite rises rapidly with increasing Ca-exchange until a $Ca/Na_2O$ weight ratio of about 2 (point 1 on the curve), corresponding to that of typical commercial 5A zeolites. With further calcium exchange to a level corresponding to point 2 on the A curve, practically little or no increase in nitrogen adsorption capacity is exhibited with increased content of calcium ion to a $Ca/Na_2O$ weight ratio exceeding about 22. As shown by points 3, 4 and 5 on the A curve, the nitrogen adsorption capacity of the zeolite rises rapidly with further increased Ca exchange. The points on curves A and B represent the specific nitrogen and oxygen adsorption capacity of the A zeolites at atmospheric pressure and 30°C.

Table 1 below tabulates the nitrogen and oxygen adsorption capacity of a 4A zeolite and commercial 5A zeolite as compared to highly calcium-exchanged 5A zeolites at 30°C and a pressure of 1 atmosphere, as well as the selectivity of these zeolites for nitrogen over oxygen and the adiabatic working capacity of these in the VSA process between 0.1 atmosphere and 1.0 atmosphere. The high Ca-exchanged 5A zeolites provide

- 10 -    0128545

a significantly larger adiabatic working capacity for nitrogen than commercial 5A zeolites. Consequently, more nitrogen is desorbed during the evacuation step of the VSA process. The nitrogen rinse gas needed in the process is also higher for the high Ca-exchanged 5A zeolite than commercial 5A zeolite, but the net nitrogen production rate, which is the difference between total desorbed nitrogen and the required quantity of nitrogen rinse gas, is significantly higher in the case of the high exchanged 5A zeolite.

TABLE 1

|  | 4A | Commercial 5A | High Ca Exchanged 5A |
|---|---|---|---|
| $Ca/Na_2O$ (by wt) | 0 | 1.7 | 30.8 |
| $N_2$ Capacity at 1 atm 30°C, mmoles/g | 0.26 | 0.38 | 0.66 |
| $O_2$ Capacity at 1 atm 30°C, mmoles/g | 0.10 | 0.14 | 0.21 |
| $N_2$ Selectivity from Air 1 atm., 30°C | 2.6 | 3.8 | 3.7 |
| Heats of Adsorption | | | |
| $N_2$, KCal/mole | 4.7 | 5.7 | 5.4 |
| $O_2$, KCal/mole | 3.2 | 3.6 | 4.0 |
| Adiabatic Working Capacity (1A-0.1A) in APCI VSA Process, To = 20°C, mmoles/g | 0.30 | 0.37 | 0.60 |
| $N_2$ Rinse in VSA Process mmoles/g | 0.19 | 0.20 | 0.24 |
| $N_2$ Product in VSA Process mmoles/g | 0.11 | 0.17 | 0.36 |

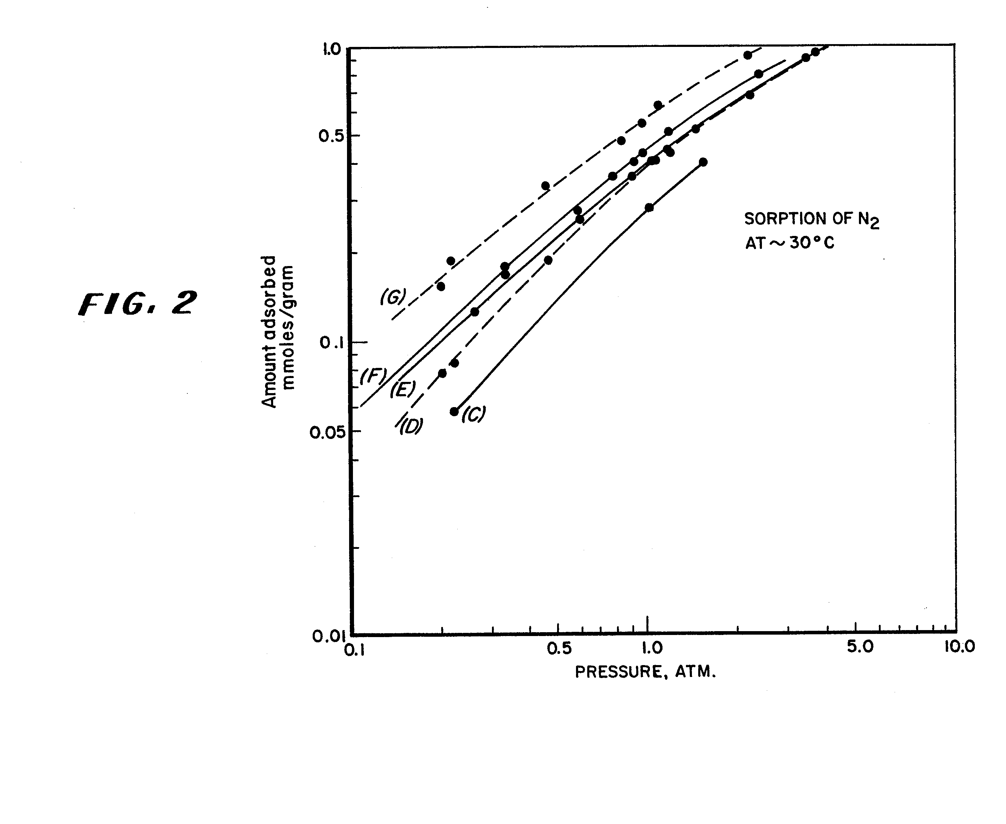

The nitrogen sorption capacity of various A zeolites at about 30°C as a function of pressure is illustrated in Figure 2. Curve C depicts the performance of a commercial 4A zeolite, Curve D a commercial 5A zeolite, Curve E of Ca-A zeolite having a $Ca/Na_2O$ weight ratio

of 4.43, Curves F and G of two different samples of high Ca A zeolites. The particular composition of these zeolites is shown in Table 2 below:

TABLE 2

| Curve Fig 2 | % Ca | % CaO | % Na$_2$O | Wt. % Ca/ Wt. % Na$_2$O |
|---|---|---|---|---|
| (D) Comm 5A | 9.7[1] | 13.57[2] | 2.42 | 4.0 |
| (E) Med Ca 5A | 11.597 | 16.73[2] | 2.62 | 4.43 |
| (F) High Ca 5A | 13.872[1] | 19.41[2] | 0.61 | 22.7 |
| (G) High Ca 5A | 13.66[1] | 19.12 | 0.54 | 25.3 |

[1] Analyzed as Ca, CaO calculated
[2] Analyzed as CaO, Ca calculated

As Na A zeolite is exchanged by Ca up to about the 75% level of commercial 5A zeolites (Ca/Na$_2$O from 0 to about 1.7), the nitrogen adiabatic working capacity and selectivity for nitrogen do increase. At the same time the heat of adsorption is also increased. In the case of the more highly Ca-exchanged 5A zeolite corresponding to points 3, 4, and 5 on the Curve A of Figure 1, contrary to what was found with 5A zeolites of lower Ca content, the selectivity for nitrogen and the heat of adsorption do not change materially. Typically an increase in nitrogen capacity is also expected to exhibit a corresponding increase in the heat of sorption, which is not the case with highly exchanged Ca-A zeolite. Thus, the adiabatic working capacity of the high Ca-A zeolite is materially improved with the end result that at levels approaching about 98% or higher calcium exchange (corresponding to Ca/Na$_2$O weight ratios above about 30) considerable improvement in the performance in the VSA process for nitrogen separation from air and from other $O_2$-$N_2$ gas mixtures is obtained, in the order of about a two-fold improvement over commercial 5A zeolite.

- 12 - 0128545

The high Ca-exchanged zeolites of the present invention may be prepared by base exchange of the sodium in 4A or commercial 5A zeolites with a water soluble calcium salt, such as calcium nitrate by known ion-exchange methods.  As the extent of sodium replacement by calcium is increased, greater difficulty is experienced in further ion exchange, and it becomes necessary to resort to such techniques as raising the temperature of the treatment and/or repetition of the exchange operation with fresh solutions of the calcium salt.

In practice of the invention, the usual known systems and operating conditions of the VSA process for nitrogen-oxygen separation may be employed using the highly Ca-exchanged A zeolites.  In a preferred operation to recover from atmospheric air an oxygen-enriched primary effluent and a nitrogen desorbate of high purity, a Ca-A zeolite having a $Ca/Na_2O$ weight ratio of about 30 may be employed in a system, such as that illustrated in U.S. patent 4,013,429.  The system comprises two main sorbent columns containing the high Ca-A zeolite for preferential nitrogen sorption, each preceded by a pretreatment column containing the usual sorbent for retaining moisture and $CO_2$, such as silica gel, alumina or a commercial zeolite such as 5A or 13X molecular sieve.  During a complete cycle of 8 minutes (480 seconds) each of the main beds and the pretreatment beds undergo the sequence of operations shown in Table 3 below.

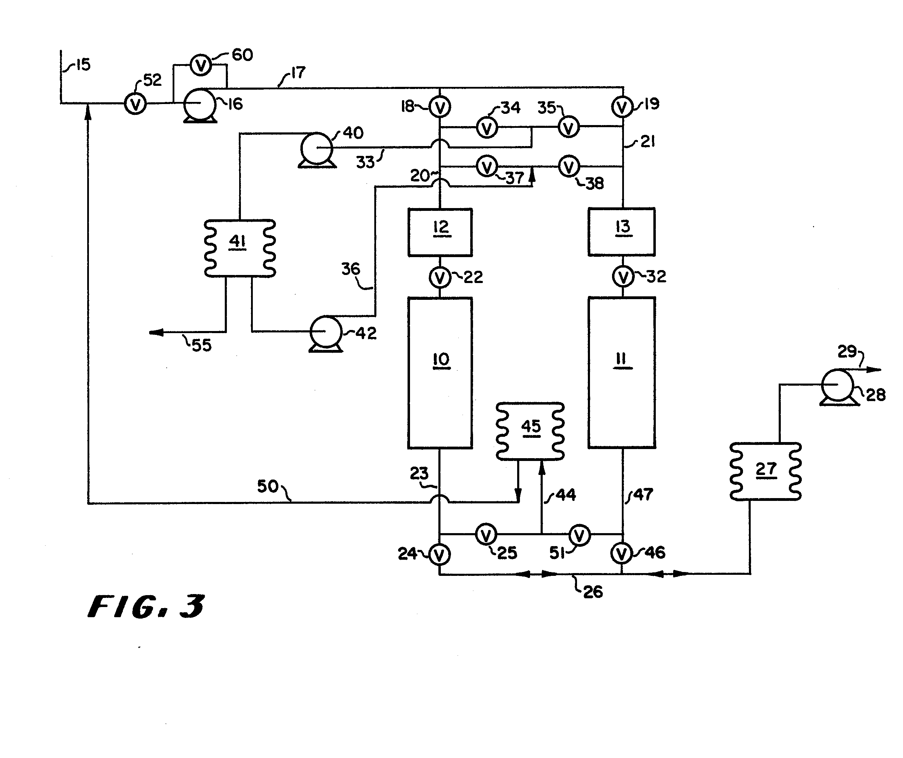

A process flow diagram of a preferred system for the practice of the inventionin air separation is illustrated in Figure 3.

The nitrogen selective highly Ca exchanged-A zeolite is contained in two parallel adsorbent columns 10 and 11, operated alternately in timed sequence. Upstream of columns 10 and 11 respectively, are adsorbent beds 12 and 13 containing solid adsorbent effective in removal of water and $CO_2$ from the incoming gas prior to its admission to column 10 or 11.

The ambient air to be fractionated is supplied by line 15 through blower 16 discharging into manifold 17. Alternate feeding of the gas into the adsorbent system comprising beds 12 and 10 as one train and that comprising beds 13 and 11 the other, is achieved by opening and closing valves 18 and 19 in timed sequence so as to supply the feed air to bed 12 through line 20 during a fixed period with valve 18 open, after which valve 18 is closed and valve 19 opened to supply the feed air to beds 13 and 11 through line 21.

During the on-stream period or air blow period while air, which contains moisture and $CO_2$, is being supplied to pretreatment bed 12 through open valve 18, valve 22 in the line between that bed and bed 10 is open. Moisture and $CO_2$ are selectively removed by the adsorbent in bed 12 and the air, thus dried and freed of these contaminants, then passes into bed 10 containing an adsorbent selective in the adsorption of nitrogen, permitting oxygen-enriched gas to pass through to discharge into line 23, valve 24 being open and valve 25 closed.

Line 23 feeds into discharge line 26, communicating with an expandable chamber 27 in which the oxygen-rich gas is collected and temporarily stored and from which it is withdrawn by pump 28 and line 29 for storage, use or further processing.

The on-stream period of air blow thus described is continued for a time related to the nitrogen adsorption capacity of bed 10; that is, short of the time that the nitrogen front will begin to break through the discharge end of bed 10 and depending on the desired quality of the oxygen-enriched product. The pretreatment bed is sized so that during the on-stream air blow, the bed

- 14 -                    0128545

has an adsorbent capacity sufficient to pick up and hold the moisture and $CO_2$ content of the influent air so that these do not enter bed 10.

During this period while beds 10 and 12 are on air blow, beds 11 and 13 are being evacuated. This is accomplished through line 21, with valve 19 being closed, and valve 32 between beds 11 and 13 being open. The previously adsorbed nitrogen in bed 11 is now desorbed in a flow direction counter to the initial air blow supplied to that bed, and in the embodiment illustrated in the accompanying drawing, passes upwardly through bed 11 through open valve 32 into bed 13, thence into line 21.

As shown in the illustrated embodiment of the invention, parallel lines 20 and 21, each communicates with a common nitrogen discharge line 33, respectively through valves 34 and 35. Lines 20 and 21 also communicate with a common nitrogen supply line 36 respectively through valves 37 and 38. With valve 35 being open, and valves 19, 38, 34 and 37 being closed during evacuation of beds 11 and 13, the desorbing nitrogen passes through open valve 35 into discharge line 33 under suction of vacuum pump 40 and is discharged into expandable nitrogen storage chamber 41.

Evacuation of beds 11 and 13 is continued in the same manner during the next following period in the sequence of operations, while beds 12 and 10 undergo rinse with nitrogen at the termination of air blow thereto. Nitrogen rinse of beds 12 and 10 is effected in the same gas flow direction as the air blow. Nitrogen from storage in vessel 41 is withdrawn by pump 42 and is passed by line 36 through open valve 37 and line 20 into bed 12. During this step, of course, valves 18, 19, 34 and 38 remain closed. The supplied rinse nitrogen passes from bed 12 through open valve 22 into bed 10. At the discharge end of bed 10, valve 24 being closed, the rinse gas flows through now opened valve 25 and line 44 into rinse gas collection vessel 45. Throughout this period while beds 12 and 10 are being rinsed with nitrogen, beds 11 and 13 continue to be evacuated as already described.

In the next step in the sequence, while beds 12 and 10 continue to be rinsed with nitrogen and evacuation of bed 13 is continued, bed 11 is subjected to rinsing or repressuring with oxygen-rich gas. This is accomplished by now closing valve 32 to discontinue gas flow communication between beds 11 and 13, and opening valve 46 in line 47 at the oxygen discharge end of bed 11. Oxygen rich gas from vessel 27 thus flows into the previously evacuated bed 11 and brings that bed to desired operating pressure for the subsequent on-stream air blow.

In the next step in the sequence, the nitrogen rinse of beds 12 and 10 is terminated and these beds are subjected to evacuation; also at this stage, bed 13 is opened to flow of oxygen-rich gas from vessel 27 through bed 11, achieved by now opening valve 32 and closing valve 35, while valve 46 remains open. Evacuation of beds 10 and 12 is effected, as heretofore described in a previous stage of the sequence applied to beds 11 and 13. Thus, with valves 24 and 25 closed, the previously adsorbed nitrogen gas from bed 10 is desorbed by suction and withdrawn into bed 12 and thence through line 20 and opened valve 34 into nitrogen discharge line 33 and vessel 41, under the influence of vacuum pump 40.

Evacuation of beds 10 and 12 in the manner above described is continued for the next two time periods while certain operational changes are effected sequentially in beds 11 and 13. Beds 11 and 13 having been rinsed or repressured by flow of oxygen-rich gas into these from vessel 27, these beds are now ready to receive the charge of air to be fractionated. Accordingly, while beds 12 and 10 are still being evacuated, the flow of

- 16 -                    0128545

ambient air from manifold 17 is directed through line 21 and opened valve 19 into bed 13, valves 35 and 38 remaining closed.  Moisture and $CO_2$ are removed from the incoming air in bed 13 and the thus dried and prepurified air flows through opened valve 32 into bed 11 wherein nitrogen is selectively adsorbed, and the oxygen-enriched air thus obtained is discharged from bed 11 into line 47 from which it flows through open valve 46 and line 26 into vessel 27.  During this period also, the gas from vessel 45 is withdrawn through line 50 and charged to the inlet of pump 16 joining the ambient feed air supplied thereto by line 15.  The feed air being thus diluted by the recycled gas from vessel 45 which is free of moisture and $CO_2$, reduces the burden placed on beds 12 and 13 in their turn.

At the interruption of the air blow to beds 13 and 11, valve 19 is closed, and valve 38 opened, to permit flow of nitrogen rinse gas into bed 13, pumped from vessel 41 through line 36.  The nitrogen gas passes from bed 13 through open valve 32 into bed 11 and is discharged through line 47.  During this time valve 46 is closed and valve 51 opened to permit the discharged nitrogen to flow into vessel 45 through line 44.

The next stage in the sequence, while beds 13 and 11 are still being rinsed with nitrogen, involves the closing of valve 22, so that evacuation of bed 12 is continued alone, while bed 10 is now subjected to rinsing or repressuring with oxygen-rich gas from vessel 27, via lines 26 and 23 through open valve 24. After completion of this repressuring of bed 10, and completed evacuation of bed 12, valve 22 is reopened to permit flow of the oxygen-rich gas into bed 12 to bring that bed up to the desired on-stream operating pressure. Such repressuring of bed 12 constitutes the last stage in the sequence, after which on-stream supply of ambient air from line 15 together with recycled gas from vessel 45 will be resumed, to repeat the cycle of operations already described. During this last stage in the sequence, beds 11 and 13 are placed on evacuation by now closing valves 34, 51 and 38, and opening valve 35, thus effecting desorption of beds 11 and 13, through line 33, conveyed by pump 40 into vessel 41. Vessel 41 is provided with a discharge line 55 through which nitrogen of high purity can be withdrawn from that vessel for desired use.

In the embodiment illustrated in Figure 3, two main beds of adsorbent in parallel each provided with a pretreatment bed, operate in a scheduled sequence, wherein each main bed undergoes in sequential order air blow, nitrogen rinse and desorption of nitrogen by evacuation, followed by repressuring with oxygen-rich gas. In such a system, there are time periods during which neither main bed is receiving ambient air. During the periods that valves 18 and 19 are both closed, pump 16 may be permitted to idle by temporarily shutting off air supply thereto by closing valve 52 in line 15. Alternately, the air blower may be operated in the recycle mode by opening valve 60. If desired, more than 2 parallel trains of columns may be employed to maintain continuity of the air blow operation.

Table 3 below illustrates a time program for the various steps in the sequence of operations based on an embodiment employing a suggested 8 minute cycle, and indicating the valve positions during the sequence. It will be understood, however, that the 8 minute cycle described is merely illustrative and other time cycles may be employed in practice of the process.

TABLE 3

| Operations | | | | Valve Positions | | | | | | | | | | | |
|---|---|---|---|---|---|---|---|---|---|---|---|---|---|---|---|
| Time (Secs) | Pretreat Beds | | Main Beds | | | | | | | | | | | | | |
| | 12 | 13 | 10 | 11 | 18 | 19 | 22 | 32 | 24 | 46 | 34 | 35 | 25 | 51 | 37 | 38 |
| 0-10 | Evac. | $N_2$ Rinse | $O_2$ Rinse | $N_2$ Rinse | C | C | C | O | O | C | O | C | C | O | C | O |
| 10-60 | $O_2$ Rinse | Evac. | $O_2$ Rinse | Evac. | C | C | O | O | O | C | C | O | C | C | C | C |
| 60-150 | Air blow | Evac. | Air blow | Evac. | O | C | O | O | O | C | C | O | C | C | C | C |
| 150-240 | $N_2$ Rinse | Evac. | $N_2$ Rinse | Evac. | C | C | O | O | C | C | C | O | O | C | O | C |
| 240-250 | $N_2$ Rinse | Evac. | $N_2$ Rinse | $O_2$ Rinse | C | C | O | C | C | O | C | O | O | C | O | C |
| 250-300 | Evac. | $O_2$ Rinse | Evac. | $O_2$ Rinse | C | C | O | O | C | O | O | C | C | C | C | C |
| 300-390 | Evac. | Air blow | Evac. | Air Blow | C | O | O | O | C | O | O | C | C | C | C | C |
| 390-480 | Evac. | $N_2$ Rinse | Evac. | $N_2$ Rinse | C | C | O | O | C | C | O | C | C | O | C | O |

O = Open
C = Closed

- 19 - 0128545

In pretreatment beds 12 and 13, any solid adsorbent or physical mixture of adsorbents suitable for retaining moisture and $CO_2$ may be employed; such as silica gel, alumina, activated carbon or a zeolite molecular sieve of natural or synthetic origin, such as mordenite or commercial 5A or 13X zeolite.

While not restricted thereto, it is preferred to operate the air blow at slightly above atmospheric pressure sufficient to accommodate the pressure drop through the adsorbent beds, valves and lines in the system. In the vacuum desorption of the main beds 10 and 11, these are brought to an intermediate pressure of preferably 30 to 100 Torr. The final vacuum desorption of pretreatment beds 12 and 13 is preferably at a final pressure in the range of 10 to 50 Torr. The selected level of vacuum to be utilized in the main adsorbent beds will depend upon the desired purity of the recovered gas products. At the highest purity, of course, there is a corresponding sacrifice in yield quantity. The final pressure or lowest pressure attained by the further evacuation of the pretreatment beds alone, is dictated by the equilibrium vapor pressure of water over the adsorbent selected for removal of water and $CO_2$. In all instances, however, the final pressure attained on desorption of the water - $CO_2$ adsorbent beds will be substantially lower than the final pressure in the nitrogen adsorber beds.

The illustrated embodiment is predicated on a practical system employing two parallel trains of adsorbers operated in a programmed time schedule of one-half cycle out of phase. This insures a continuous flow of product gas and efficient utilization of the gas-handling equipment. In some instances it may be found desirable to employ a time schedule based on three or more parallel trains of adsorbers in appropriate time sequence. The valve changes during the cycle of operations in such modifications are programmed in well known manner and are carried out automatically under control of a cycle timer device.

Other known VSA systems may be employed in the practice of the invention with the utilization of the highly Ca exchanged 5A zeolites, such as, for example, the system shown and described in U.S. Patent 4,264,340, particularly for recovering a dry nitrogen stream of high purity, in addition to the oxygen enriched primary effluent.

## Example

Each of the main bed contains about 1.2 kg of the highly Ca exchanged 5A zeolite in pellet form and each of the pretreatment beds contains about 0.5 kg of 13X zeolite. Atmospheric air is charged into the system at a pressure of about 1.07 bar during the air blow period collecting an oxygen-enriched product stream containing about 90% $O_2$. The main and pretreatment beds are then rinsed with part of the high purity nitrogen product recovered as a desorbate during the evacuation step. Following nitrogen rinse, the beds are evacuated together to a level of $\sim$ 85 millibar and then the pretreatment column is further evacuated alone to $\sim$ 20 millibar while the main bed is pressurized with part of the oxygen enriched product gas. Part of the desorbed $N_2$ is withdrawn as product containing $\sim$ 99.8% $N_2$ at a rate of about 2.7 sl/minute.

The present invention has been described with reference to a preferred embodiment, but it is anticipated that those skilled in the art can contemplate variations which are deemed within the scope of the invention, which scope should be ascertained from the claims which follow.

WHAT IS CLAIMED:

1. In the production of high purity nitrogen and an oxygen-enriched product from air by a cycle sequence wherein atmospheric air is passed through a pretreatment bed of adsorbent for removal of water and $CO_2$ and into a second adsorbent bed containing adsorbent selective in retention of nitrogen as opposed to oxygen to provide a primary oxygen-rich effluent, evacuating said adsorbent beds to effect removal of adsorbed nitrogen from said second adsorbent bed by flow therefrom into and through said pretreatment bed to desorb water and $CO_2$ from the latter bed, and finally restoring said beds to substantially atmospheric pressure for repetition of the cycle; the improvement which comprises the utilization as the adsorbent in said second bed of a type A molecular sieve zeolite having a $Ca/Na_2O$ weight ratio of at least about 25.

2. The method as defined in Claim 1 wherein prior to evacuating said adsorbent beds they are rinsed with high purity nitrogen gas.

P64-B

FIG. 1

FIG. 2

SORPTION OF N₂
AT ～ 30°C

Amount adsorbed
mmoles/gram

PRESSURE, ATM.

(G)
(F)
(E)
(D)
(C)

2/3

0128545

FIG. 3